# EUROPEAN PATENT SPECIFICATION

(11) **EP 3 366 266 B1**
(45) Date of publication and mention of the grant of the patent: **20.11.2024**
(21) Application number: 17001862.6
(22) Date of filing: 14.11.2017
(51) Int. Cl.: A61G 5/02, A61G 5/10, A61G 5/12, B62M 1/24, B62M 9/16

(54) **A WHEELCHAIR FOR MEDICAL REHABILITATION**
ROLLSTUHL ZUR MEDIZINISCHEN REHABILITATION
FAUTEUIL ROULANT POUR RÉHABILITATION MÉDICALE

(30) Priority: 23.02.2017 EE 201700011
(43) Date of publication of application: 29.08.2018
(73) Proprietor: Nordest Plus OÜ, 76901 Harju maakond (EE)
(72) Inventor: Toomväli, Tanel, 76901 Harju maakond (EE); Tamm, Tarmo, 11617 Harju maakond (EE); Laussoo, Raigo, 88311 Pärnu maakond (EE)
(74) Representative: Koitel, Raivo

(56) References cited:
- CN-A- 102 488 590
- US-A- 5 242 179
- US-A1- 2007 114 750
- US-A1- 2008 246 246

## Description

### Technical field

The invention belongs in the field of special means of transport, more specifically the invention relates to a wheelchair technical aid for medical rehabilitation. The objective of the invention is to ensure that a person's legs are maintained in forced movement starting from hips while moving around or undergoing medical rehabilitation with the wheelchair using the rehabilitation device.

### Prior art

A wheelchair is a technical aid, which provides means of mobility to persons with reduced mobility. There are mainly two types of wheelchairs: manual, which are pushed forward by hand, and electrical, where the propulsion force is provided by a battery. The rear wheels of manual wheelchairs are bigger and the front wheels are smaller. Manual wheelchairs are produced with a folding frame or a rigid frame.

On the market of wheelchairs designed for the medical rehabilitation of people with certain types of disability there are various technical solutions with tilting and stand-up functions, which enable the user to stand up. There are various solutions for executing these functions by means of various lever and articulation systems, using mostly hydrodynamic devices equipped with suitable motors and electrical batteries.

There are different types of wheelchairs in use for medical rehabilitation, giving the possibility to perform various functions required for treatment
http://www.invaru.ee/ratastool-tekna-tilt-progeo;
http://www.egero.eelabivahendidltoode/ratastool-eurochair-2-kerge/ (wheelchairs Budget, Eurochair, Format, etc.);
http://manual.ee/tag/ratastool/ (standard wheelchair jazz 550, Progeo EGO, Progeo joker Evolution, etc.).

A multifunctional medical rehabilitation wheelchair is disclosed in JP2005052383 (Yoshizawa Nobuyuki, published 03.03.2005).

A wheelchair propulsion and exercise attachment is disclosed in US2008/246246 A1 (Dix Rollin, C, Pal Rahuljit, published on 09.10.2008).

A pedal rigid frame wheelchair is disclosed in CN102488590 A (Haoling Tian, published on 13.06.2012).

A four limb exercising attachment for wheelchairs is disclosed in US 5 242 179 (Beddome David C et al, published on 07.09.1993).

A wheelchair propulsion and exercise attachment is disclosed in US 2007/114750 A1 (Dix Rollin C et al, published on 24.07.2007).

### Summary of the invention

The disclosed wheelchair rehabilitation device incorporates technical means (additional functionality), which allows the paralyzed (either partially or full) feet of the person sitting in the wheelchair to a forced motion during the propel of the wheelchair (either when pushed by the care-taker or the rear wheels are rotated by hands of the person himself), whereby the feet are moved up and down, forward and backwards. As a result, the person's legs move starting from hips, meaning that the muscles vital for leg mobility are in forced motion, preventing muscle degeneration caused by the immobility of legs, and helping to restore the functionality of legs.

A wheelchair rehabilitation device incorporates technical means which comprises a frame and a pedal propulsion system. The device can be removably mounted on the front-end and on side of a framework of wheelchair.

The wheelchair itself is a conventional wheelchair which comprises a framework, a pair of rear wheels connected with a shaft and a pair of pivoting front wheels, a seat for supporting the user.

The pedal propulsion system comprises rotatable pedals with foot rests, the pedals are rotated by crankshaft, transmission sprockets, crankshaft drive sprocket, rear drive sprocket, propulsion transmission means with guide and tensioning mechanism.

The pedal propulsion system is interconnectable with the propulsion wheelchair's rear wheels.

The pedal propulsion system is executed for propulsion movement, wherein motion of rear wheel of the wheelchair is activated by continuous rotation motion of the pedals and crankshaft and vice versa.

The rear drive sprocket is mountable on the shaft of the rear wheel, the first propulsion transmission means of the wheelchair's side is mountable on the rear drive sprocket of the wheelchair's rear wheel and on the first transmission sprocket The second propulsion transmission means is located on the crankshaft drive sprocket and on the second transmission sprocket, wherein the transmission sprockets are Interconnected and mounted next to each other.

The propulsion transmission means are at an angle to each other and the pedals are in horizontally extended position in relation to the wheelchair.

The transmission sprockets, crankshaft drive sprocket, rear drive sprocket, propulsion transmission means with guide and tensioning mechanism are mountable on the same side of the wheelchair rehabilitation device's frame and the wheelchair's framework.

The tensioning mechanism of the propulsion transmission means comprises a tensioning spring system. The propulsion transmission means is a chain or belt, and the tensioning mechanism and guide is a gear or a roller and the propulsion transmission means is maintenance free.

The wheelchair rehabilitation device's frame is mountable on the front-end of wheelchair's framework by means of quick couplings and can be optionally removed from the wheelchair's framework allowing the usage of the wheelchair without the rehabilitation device by way of pushing it by a care-keeper for example. Also, this arrangement allows the rehabilitation aid to be used on a conventional wheelchair.

### List of figures

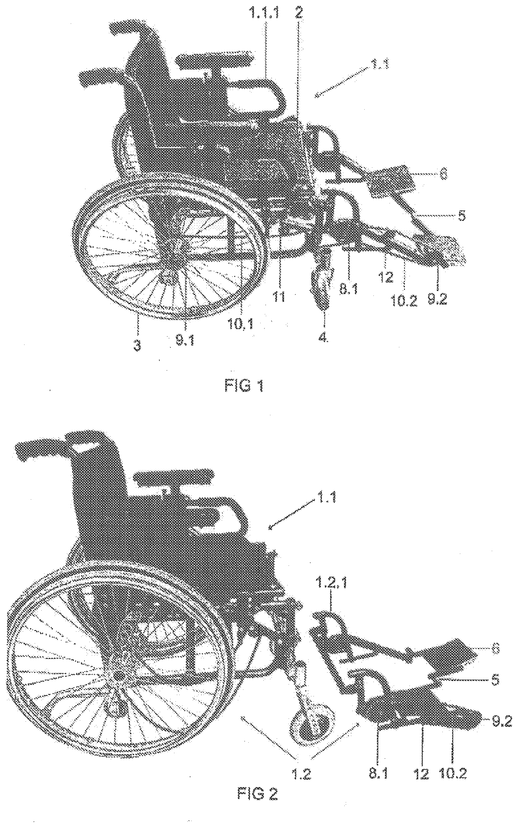

Fig. 1 is a perspective view of the wheelchair rehabilitation device mounted on a framework of a wheelchair.
Fig. 2 Is a perspective view of the wheelchair rehabilitation device removed from a framework of a wheelchair.

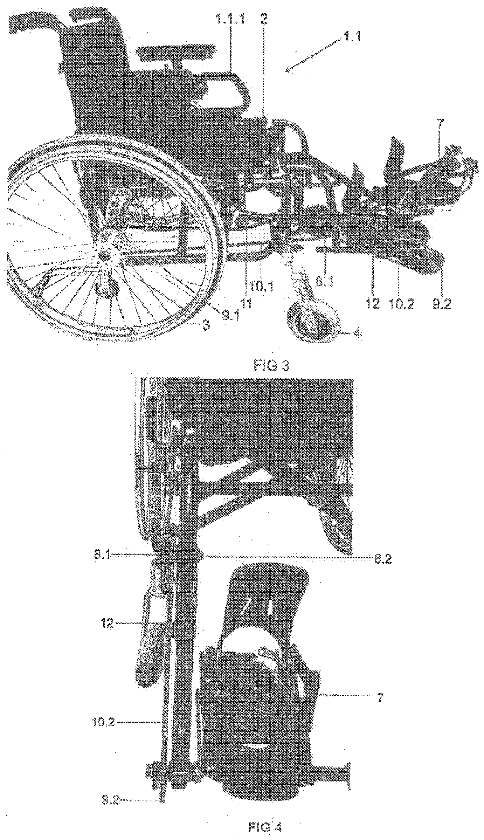

Fig. 3 is a perspective view of another embodiment of the wheelchair rehabilitation device mounted on a framework of a wheelchair.
Fig. 4 is a partial front view of another embodiment of the wheelchair rehabilitation device mounted on a framework of a wheelchair.

### Embodiment of the invention

The wheelchair 1.1 having framework 1.1.1 with a seat 2, a pair of rear wheels 3 connected with a shaft, a pair of pivoting front wheels 4. The wheelchair rehabilitation device is removably mountable on the front-end of the wheelchair 1.1 by means of quick couplings and on a side of a framework 1.1.1 of the wheelchair 1.1.

The wheelchair rehabilitation device 12 comprises a frame 1.2.1 with a pedal propulsion system comprising:
- pedals 8 rotated by crankshaft 5, foot rest 7 on pedals and first and second transmission sprockets 8.1, 8.2, crankshaft drive sprocket 9.2, second propulsion transmission means 10.2 with a guide 12 on the frame's 1.2.1 side; and
- rear drive sprocket 9.1, first propulsion transmission means 10.1 together with tensioning mechanism 11 on the wheelchair's 1.1 side.

The pedal propulsion system is interconnectable with the propulsion of wheelchair's rear wheels 3.

The pedal propulsion system is executed for propulsion movement, wherein propelling of wheelchair's rear wheels 3 is activated by rotation motion of crankshaft 6 by kneading the pedals 6 with the user's feet and the crankshaft 5 rotating is activated by propelling of wheelchair's rear wheels 3 when the wheelchair is pushed into move.

The rear drive sprocket 9.1 Is mounted on the shaft of rear wheel 3, on the side of one of the rear wheel 3, towards the wheelchair. Rear drive sprocket 9.1 is mounted by removing the respective rear wheel 3 from the shaft, attaching the rear drive sprocket 9.1 and reattaching the rear wheel 3 to the shaft.

The directly interconnected (no shaft between) and laterally positioned transmission sprockets 8.1, 8.2 are mounted next to each other.

Propulsion transmission means 10.1 and 10.2 are either chains or belts mounted on the respective gears**.**

First propulsion transmission means 10.1 is mounted on rear drive sprocket 9.1 of the respective rear wheel 3, and to the first transmission sprocket 8.1 that is on the same side with it.

First propulsion transmission means 10.1 is adjusted (tensioned or loosened) by means of tensioning mechanism 11, which is mounted to the framework 1.1.1 of wheelchair 1.1 and comprises a device (gear or roller) that Is in contact with the first propulsion transmission means 10.1, and a tensioning spring system. Tensioning mechanism 11 can be applied independently by the user.

Crankshaft drive sprocket 9.2 is installed to the outer side of one of the pedals 8 of crankshaft 5 on frame 1.2.1.

The second propulsion transmission means 10.2 is mounted on crankshaft drive sprocket gear 9.2 and to the second transmission sprocket 8.2, which is on the same side with the latter.

The second propulsion transmission means 10.2 is guided by means of guide 12, which comprises a device (gear or roller) that is in contact with the first propulsion transmission means 10.2 and is in a fixed position.

Transmission sprockets 8.1, 8.2, rear drive sprocket 9.1 and crankshaft drive sprocket 9.2, propulsion transmission means 10.1,10.2 with guide 12 and tensioning mechanism 11 are mounted on a same side of wheelchair rehabilitation device's 1.2 frame 1.2.1 and the wheelchair's 1.1 framework 1.1.1.

Propulsion transmission means 10.1, 10.2 could be executed, for example, by means of a chain or belt transmission, where power is transferred through transmission sprockets 8.1, 8.2 that are at the point of contact between the means. In the preferred embodiment, propulsion transmission means. 10.1, 10.2 are executed by means of a chain, which is maintenance free in order to ensure longer service life for it and to prevent soiling and/or damaging the user or his/her clothes.

Power is transmitted from the propulsive movement of the wheelchair to the pedal propulsion system of the rehabilitation device and vice versa through transmission sprockets 8.1, 8.2 and rear drive sprocket 9.1 and crankshaft drive sprocket 9,2, as a result of which the wheelchair/pedals propel. The propulsive moving force derives either from propelling the wheels of the wheelchair and/or from pressure applied by the user on his/her feet to the pedals.

Power from propulsion transmission means 10.1, 10.2 is transmitted through transmission sprockets 8.1, 8.2, as a result of which the propulsive motion of wheelchair wheels 3 starts the continuous rotational motion of crankshaft 5 and vice versa. In other words, the propulsive motion of wheelchair initiates the continuous rotational motion of crankshaft 5 and connected pedals 8, whereby the legs of the user on the pedals 6 of the wheelchair are moved simultaneously up and down and forward and backwards. If the legs of the wheelchair user are strong enough, the user can start independently the propulsive motion of wheelchair by pushing pedals 8 with the legs.

Propulsion transmission means 10.1 and 10.2 are at an angle to each other and the pedals 8 are in horizontally extended position in relation to the wheelchair 1.1, and this angle can be modified according to the needs of the medical rehabilitation, in order to ensure working of muscles and bloodstream of legs also above knees (also in the hips), which is the main advantage of this invention.

Rear drive sprocket 9.1 can be replaced in order to change its transmission force. The larger the diameter, the less force is applied to move the legs.

Propulsion transmission means 10.1, 10.2 can be fitted with covers to protect the user of the wheelchair or his/her clothes.

In one embodiment, pedal 6 comprises an optional footrest 7, which is rigid at its rear section and can be fixed securely in order to support the legs of the wheelchair user, because due to muscle degeneration the legs of the wheelchair user are usually very unstable and their movement is difficult to control. The position and height of pedals 6 and foot rests 7 can be changed as needed. The length of the shaft between detachable pedals 5 can also be changed to ensure better medical rehabilitation of muscles and to take into account the physiological specifics of the wheelchair user.

The rear wheels 3 of the wheelchair 1.1 (pushing by care-taker for example) activate the pedals 6 and kneading the pedals 6 activates the rear wheels 3. The pedals 6 are constantly (also passive) moving and this is important, because the muscles of the legs, hips and bottom also work passively, if the wheelchair is only pushed by care-taker.

The wheelchair rehabilitation device is universal, meaning that it can be fitted to various types of conventional wheelchairs. The wheelchair can be used as a normal wheelchair by easily removing the rehabilitation device from the wheelchair without any special tools and installing the usual stationary pedals/foot rests if necessary.

### List of markings:

1.1 - wheelchair
1.1.1 - wheelchair's framework
1.2 - rehabilitation device
1.2.1 - frame of rehabilitation device
2 - seat (with hand rests and a back rest)
3 - wheelchair's rear wheels
4 - front wheels
5 - crankshaft
6 - pedal
7 - foot rest on pedals
8.1 - first transmission sprocket
8.2 - second transmission sprocket
9.1 -rear drive sprocket
9.2. - crankshaft drive sprocket
10.1 - first propulsion transmission means
10.2 - second propulsion transmission means
11 - tensioning mechanism of first propulsion transmission means 10.1
12 - guide of second propulsion transmission means 10.2

## Claims

1. A wheelchair rehabilitation device (1.2) mountable on a framework (1.1.1) of a wheelchair (1.1) having a pair of rear wheels (3) connected with a shaft **characterized In that**
the wheelchair rehabilitation device (1.2) is removably mountable on the front end and on a side of a framework (1.1.1) of wheelchair (1.1);
the wheelchair rehabilitation device (1.2) comprises a frame (1.2.1) and a pedal propulsion system comprising:
- pedals (6) rotatable by a crankshaft (5), and transmission sprockets (8.1, 8.2), a crankshaft drive sprocket (9.2), a second propulsion transmission means (10.2), a guide (12); and
- a rear drive sprocket (9.1), a first propulsion transmission means (10.1), a tensioning mechanism (11);
the pedal propulsion system is interconnectable with the propulsion of wheelchair's rear wheels (3);
the wheelchair rehabilitation device's (1.2) frame (1.2.1) is removably mountable on the front-end of a wheelchair's (1.1) framework (1.1.1) by means of quick couplings;
the transmission sprockets (8.1, 8.2), the crankshaft drive sprocket (9.2), the rear drive sprocket (9.1), the propulsion transmission means (10.1, 10.2) with the guide (12) and the tensioning mechanism (11) are mountable on a same side of the wheelchair rehabilitation device's (1.2) frame (1.2.1) and the wheelchair's (1.1) framework (1.1.1); wherein
- the rear drive sprocket (9.1) is mountable on the shaft of wheelchair's rear wheel (3);
- the first propulsion transmission means (10.1) is mountable on the rear drive sprocket (9.1) and on the first transmission sprocket (8.1);
- the second propulsion transmission means (10.2) is mountable on the crankshaft drive sprocket (9.2) and on the second transmission sprocket (8.2);
the transmission sprockets (8.1, 8.2) are interconnected and mountable next to each other;
- the propulsion transmission means (10.1,10.2) are at an angle to each other;
- the pedals (6) are in horizontally extended position in relation to the wheelchair (1.1);
wherein the pedal propulsion system is configured so that power from the first and second propulsion transmission means (10.1, 10.2) is transmitted through the first and second transmission sprockets (8.1, 8.2) so that translational motion of the wheelchair's rear wheels (3) causes rotational motion of the crankshaft (5), and vice versa.

2. Wheelchair's rehabilitation aid according to claim 1, **characterized in that** tensioning mechanism (11) of first propulsion transmission means (10.1) comprises a tensioning spring system.

3. Wheelchair's rehabilitation aid according to claim 1 and 2, **characterized in that** the pedal (6) comprises a foot rest (7).

4. Wheelchair's rehabilitation aid according to claims 1 to 3, **characterized in that** the propulsion transmission means (10.1, 10.2) are chains, and the tensioning mechanism (11) and the guide (12) is a gear.

5. Wheelchair's rehabilitation aid according to claims 1 to 4, **characterized in that** the propulsion transmission means (10.1, 10.2) are belts, and the tensioning mechanism (11) and the guide (12) is a roller.

## Patentansprüche

1. Rollstuhlrehabilitationsvorrichtung (1.2), die an einem Rahmen (1.1.1) eines Rollstuhls (1.1) mit zwei hinteren Rädern (3) montiert werden kann, die mit einer Welle verbunden sind, **sie zeichnet sich dadurch aus, dass**
die Rollstuhlrehabilitationsvorrichtung (1.2) abnehmbar am vorderen Ende und an einer Seite eines Rahmens (1.1.1) eines Rollstuhls (1.1) montiert werden kann;
die Rollstuhlrehabilitationsvorrichtung (1.2) einen Rahmen (1.2.1) und ein Pedalantriebssystem umfasst, das Folgendes beinhaltet:
- mit einer Kurbelwelle (5) rotierbare Pedale (6), und Übertragungskettenräder (8.1, 8.2), ein Kurbelwellenantriebskettenrad (9.2), ein zweites Antriebsübertragungsmittel (10.2), eine Führung (12); und
- ein hinteres Antriebskettenrad (9.1), ein erstes Antriebsübertragungsmittel (10.1), einen Spannmechanismus (11);
das Pedalantriebssystem kann mit dem Antrieb der Hinterräder (3) des Rollstuhls verbunden werden;
der Rahmen (1.2.1) der Rollstuhlrehabilitationsvorrichtung (1.2) kann am vorderen Ende des Rahmens (1.1.1) eines Rollstuhls (1.1) mittels Schnellkupplungen abnehmbar montierbt werden;
die Übertragungskettenräder (8.1, 8.2), die Kurbelwelle: Antriebskettenrad (9.2), das hintere Antriebskettenrad (9.1), die Antriebsübertragungsmittel (10.1, 10.2) mit der Führung (12) und dem Spannmechanismus (11) können auf derselben Seite des Rahmens (1.2) der Rollstuhlrehabilitationsvorrichtung (1.2) und des Rahmens (1.1.1) des Rollstuhls (1.1) montiert werden; wobei
- das hintere Antriebskettenrad (9.1) auf der Welle des Hinterrads (3) des Rollstuhls montiert werden kann;
- das erste Antriebsübertragungsmittel (10.1) am hinteren Antriebskettenrad (9.1) und am ersten Übertragungskettenrad (8.1) montiert werden kann;
- das zweite Antriebsübertragungsmittel (10.2) am Kurbelwellenantriebskettenrad (9.2) und am zweiten Übertragungskettenrad (8.2) montiert werden kann;
- die Übertragungskettenräder (8.1, 8.2) miteinander verbunden sind und nebeneinander montiert werden können;
- die Antriebsübertragungsmittel (10.1, 10.2) in einem Winkel zueinander stehen;
- die Pedale (6) sich in Bezug auf den Rollstuhl (1.1) in einer horizontal ausgefahrenen Position befinden;
wobei das Pedalantriebssystem so konfiguriert ist, dass die Leistung vom ersten und zweiten Antriebsübertragungsmittel (10.1, 10.2) durch das erste und zweite Übertragungskettenrad (8.1, 8.2) übertragen wird, sodass die übertragene Bewegung der Hinterräder (3) des Rollstuhls eine Drehbewegung der Kurbelwelle (5) verursacht und umgekehrt.

2. Die Rollstuhlrehabilitationshilfe nach Anspruch 1 **ist dadurch gekennzeichnet, dass** der Spannmechanismus (11) des ersten Antriebsübertragungsmittels (10.1) ein Spannfedersystem umfasst.

3. Die Rollstuhlrehabilitationshilfe nach Anspruch 1 und 2 **ist dadurch gekennzeichnet, dass** das Pedal (6) eine Fußstütze (7) aufweist.

4. Die Rollstuhlrehabilitationshilfe nach den Ansprüchen 1 bis 3 **ist dadurch gekennzeichnet, dass** die Antriebsübertragungsmittel (10.1, 10.2) Ketten und der Spannmechanismus (11) und die Führung (12) ein Getriebe sind.

5. Die Rollstuhlrehabilitationshilfe nach den Ansprüchen 1 bis 4 **ist dadurch gekennzeichnet, dass** die Antriebsübertragungsmittel (10.1, 10.2) Riemen und der Spannmechanismus (11) und die Führung (12) eine Rolle sind.

## Revendications

1. Dispositif d'aide à la réhabilitation pour fauteuil roulant (1.2) pouvant être monté sur le cadre (1.1.1) d'un fauteuil roulant (1.1) ayant une paire de roues arrière (3) reliées à un arbre, **caractérisé en ce que**
le dispositif d'aide à la réhabilitation pour fauteuil roulant (1.2) peut être monté de manière amovible sur l'extrémité avant et sur un côté du cadre (1.1.1) d'un fauteuil roulant (1.1) ;
le dispositif d'aide à la réhabilitation pour fauteuil roulant (1.2) comprend un cadre (1.2.1) et un système de propulsion à pédale comprenant:
- des pédales (6) pouvant tourner grâce à un vilebrequin (5), et des pignons de transmission (8.1, 8.2), un pignon d'entraînement de vilebrequin (9.2), un deuxième moyen de transmission de propulsion (10.2), un guide (12); et
- un pignon d'entraînement arrière (9.1), un premier moyen de transmission de propulsion (10.1), un mécanisme de tension (11);
le système de propulsion à pédales est interconnectable avec la propulsion des roues arrière du fauteuil roulant (3);
le cadre (1.2.1) du dispositif d'aide à la réhabilitation pour fauteuil roulant (1.2) peut être monté de manière amovible sur l'extrémité avant du cadre (1.1.1) d'un fauteuil roulant (1.1) au moyen de raccords rapides;
les pignons de transmission (8.1, 8.2), le vilebrequin : pignon d'entraînement (9.2), le pignon d'entraînement arrière (9.1), les moyens de transmission de propulsion (10.1, 10.2) avec le guide (12) et le mécanisme de tension (11) peuvent être montés sur un même côté du cadre (1.2.1) du dispositif d'aide à la réhabilitation pour fauteuil roulant (1.2) et du cadre (1.1.1) du fauteuil roulant (1.1); dans lequel
- le pignon d'entraînement arrière (9.1) peut être monté sur l'arbre de la roue arrière (3) du fauteuil roulant;
- le premier moyen de transmission de propulsion (10.1) peut être monté sur le pignon d'entraînement arrière (9.1) et sur le premier pignon de transmission (8.1);
- le deuxième moyen de transmission de propulsion (10.2) peut être monté sur le pignon d'entraînement du vilebrequin (9.2) et sur le deuxième pignon de transmission (8.2);
- les pignons de transmission (8.1, 8.2) sont interconnectés et peuvent être montés l'un à côté de l'autre;
- les moyens de transmission de propulsion (10.1, 10.2) forment un angle l'un par rapport à l'autre;
- les pédales (6) sont en position étendue horizontalement par rapport au fauteuil roulant (1.1);
dans lequel le système de propulsion à pédales est configuré de telle sorte que la puissance provenant des premier et deuxième moyens de transmission de propulsion (10.1, 10.2) est transmise par l'intermédiaire des premier et deuxième pignons de transmission (8.1, 8.2) de telle sorte que le mouvement de translation des roues arrière du fauteuil roulant (3) provoque un mouvement de rotation du vilebrequin (5), et vice versa.

2. Dispositif d'aide à la réhabilitation pour fauteuil roulant selon la revendication 1, **caractérisé en ce que** le mécanisme de tension (11) du premier moyen de transmission de propulsion (10.1) comprend un système de ressort de tension.

3. Dispositif d'aide à la réhabilitation pour fauteuil roulant selon les revendication 1 et 2, **caractérisé en ce que** la pédale (6) comprend un repose-pied (7).

4. Dispositif d'aide à la réhabilitation pour fauteuil roulant selon les revendications 1 à 3, **caractérisé en ce que** les moyens de transmission de propulsion (10.1, 10.2) sont des chaînes, et le mécanisme de tension (11) et le guide (12) sont un engrenage.

5. Dispositif d'aide à la réhabilitation pour fauteuil roulant selon les revendications 1 à 4, **caractérisé en ce que** les moyens de transmission de propulsion (10.1, 10.2) sont des courroies, et le mécanisme de tension (11) et le guide (12) sont un rouleau.
